# FASCICULE DE BREVET EUROPEEN

(11) **EP 3 775 561 B1**
(45) Date de publication et mention de la délivrance du brevet: **07.06.2023**
(21) Numéro de dépôt: 19715475.0
(22) Date de dépôt: 03.04.2019
(51) Int. Cl.: F04D 13/06, F04D 13/08, H02K 5/22

(54) **GROUPE MOTOPOMPE INTÉGRÉ**
INTEGRIERTE MOTORPUMPENEINHEIT
INTEGRATED MOTOR-PUMP UNIT

(30) Priorité: 06.04.2018 FR 1870412
(43) Date de publication de la demande: 17.02.2021
(73) Titulaire: KSB S.A.S, 92230 Gennevilliers (FR)
(72) Inventeur: PETIT, Nicolas, 59190 Hazebrouck (FR); AERNOUT, Noémie, 59320 Sequedin (FR)
(74) Mandataire: Eidelsberg, Olivier Nathan
(86) Numéro de dépôt international: PCT/EP2019/058433
(87) Numéro de publication internationale: WO 2019/193069

(56) Documents cités:
- EP-A2- 2 426 360
- WO-A1-2016/125047
- DE-A1-102012 104 310
- DE-A1-102012 109 863
- KR-B1- 101 578 478
- US-A- 2 667 128

## Description

La présente invention se rapporte aux groupes motopompes.

On connaît un groupe motopompe, comprenant un impulseur entouré d'une volute et monté sur l'arbre de sortie d'un moteur électrique. Le moteur électrique est entouré d'une carcasse fermée, du côté opposé à l'impulseur, par un couvercle. La volute et la carcasse peuvent être constituées chacune d'une pièce ou être d'un seul tenant. Le groupe motopompe comprend un dispositif de commande du moteur disposé à l'extérieur de la carcasse. Cela impose, notamment quand on utilise un variateur de fréquence, une connectique blindée avec des câbles de grande qualité à brins isolés, notamment si le dispositif de commande comporte un variateur de fréquence.

KR 101 578 478, EP 2 426 360 et DE 10 2012 109863 décrivent un groupe motopompe suivant le préambule de la revendication 1.

L'invention vise à simplifier beaucoup la connectique et à détecter par le groupe soi-même le bon fonctionnement de son impulseur. On peut ainsi arrêter le groupe à temps, avant que ne se produise un dommage grave ou créant de grandes difficultés d'entretien ou de remise en route.

Suivant l'invention, une rehausse est interposée entre le couvercle et la carcasse et au moins un élément à fil de connexion électrique est logé dans la rehausse.

La rehausse peut être aussi d'une pièce avec le couvercle. Le couvercle est alors si profond qu'il permet d'y loger un élément à fil de connexion électrique. La profondeur du couvercle est la dimension de sa face latérale suivant l'axe de l'impulseur.

La rehausse donne la place qui permet d'intégrer le au moins un élément dans le groupe. On peut ainsi loger le dispositif de commande du moteur dans la rehausse et le relier au moteur par au moins un premier fil. Par dispositif de commande du moteur, on entend aussi le circuit de démarrage du moteur, la rehausse permettant notamment de loger le condensateur qui sert à cet effet. On y loge suivant l'invention un capteur d'une propriété de l'impulseur, qui est relié par au moins un deuxième fil à l'impulseur. Le capteur peut être un capteur de la vitesse de rotation de l'impulseur. Ce peut être aussi un capteur d'une différence entre la pression de refoulement et la pression d'aspiration. Ce peut être un capteur des vibrations de l'impulseur ou une sonde de la température du fluide véhiculé par le groupe ou de la température de garnitures ou de paliers de l'impulseur. La rehausse permet de loger tout élément à fil qui participe au fonctionnement du groupe motopompe.

Un premier joint d'étanchéité est disposé entre la rehausse et la carcasse et, également, un deuxième joint d'étanchéité assure l'étanchéité entre le couvercle et la rehausse pour empêcher que de l'humidité extérieure n'arrive dans la rehausse et dans le moteur. On peut alors avoir dans la rehausse et dans la volute des fils plus simples ne devant pas résister à l'humidité. Seul un câble submersible, donc résistant à l'humidité, est nécessaire pour amener le courant dans la rehausse. Le câble a notamment une gaine en caoutchouc entourant plusieurs conducteurs, le cas échéant muni d'une tresse métallique de blindage, tandis qu'à l'intérieur de la rehausse, on peut se contenter des brins à gaine isolante propre, mais sans gaine en caoutchouc.

On souhaite que la rehausse soit fabriquée sous la forme d'une pièce de fonderie, qui soit la même pour divers types de pompe. Pour tenir compte de la place occupée suivant les divers types de pompe par le ou les éléments logés dans la rehausse, on peut prévoir une rallonge de rehausse empilable avec la rehausse et interposée entre la carcasse et la rehausse afin d'augmenter la place disponible entre le couvercle et le moteur.

Pour que le capteur d'une propriété de l'impulseur accède à l'impulseur sans avoir à traverser le moteur, au moins un fil passe dans une cheminée venue de fonderie avec la carcasse sur la face extérieure de celle-ci, le fil reliant le capteur d'une propriété de l'impulseur à l'impulseur. De préférence, on prévoit deux cheminées à 180° l'une de l'autre.

De préférence, la rehausse est fixée à la carcasse de manière amovible pour pouvoir intervenir sur les éléments à fil qui y sont logés et les circuits qu'ils constituent.

L'un des éléments est relié par fil à une source de courant à l'extérieur en passant dans une traversée du couvercle.

De préférence, un fil de liaison restant à l'intérieur de la volute est de constitution plus simple qu'un fil en sortant.

Il vaut mieux prévoir un moyen d'immobilisation de l'élément dans la rehausse.

Aux dessins annexés donnés uniquement à titre d'exemple :
la figure 1 est une vue en coupe axiale d'un groupe motopompe suivant l'invention et

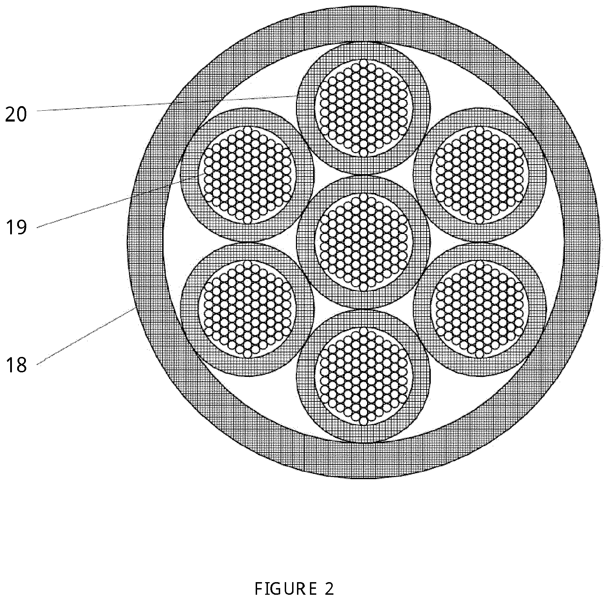

la figure 2 est une vue en coupe d'un câble sortant de la rehausse.

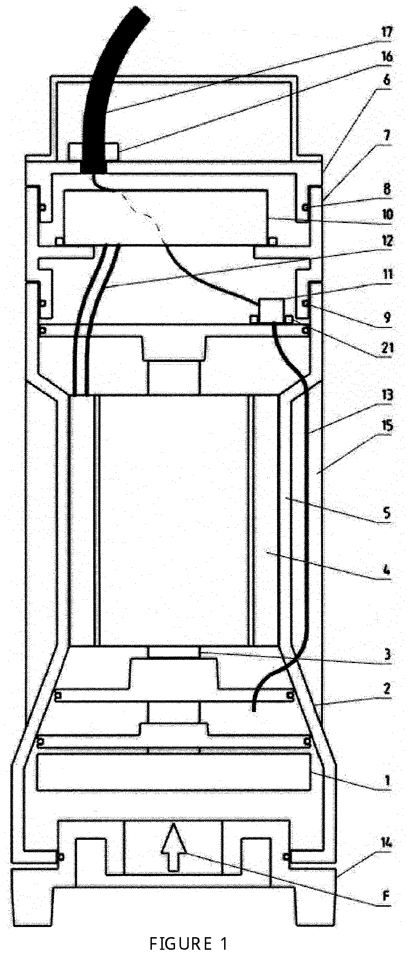

Le groupe motopompe représenté à la figure 1 comprend un impulseur 1, entouré d'une volute 2 et monté sur l'arbre 3 de sortie d'un moteur 4 électrique entouré d'une carcasse 5, laquelle est d'une seule pièce avec la volute 2. La carcasse est fermée du côté opposé à l'impulseur 1 par un couvercle 6. Une rehausse 7 est interposée entre le couvercle 6 et la carcasse 5, en étant fixée à celle-ci, de manière amovible, par trois vis. Un joint 8 assure l'étanchéité entre le couvercle 6 et la rehausse 7. Un joint 9 assure l'étanchéité entre la rehausse 7 et la carcasse 5.

Dans l'espace délimité par la rehausse entre le couvercle 6 et la carcasse 5 sont logés un dispositif 10 de commande du moteur ou un condensateur 10 de démarrage et un capteur 11. Le dispositif a deux fils 12 de connexion électriques reliés aux deux bornes du moteur 4. Le capteur 11 a un fil 13 de connexion, passant dans une cheminée 15. La cheminée 15 vient de fonderie avec la carcasse 5 en étant percée d'un trou pour le passage du fil 13. Une traversée 16 traverse le couvercle 6. Un câble 17 d'alimentation en courant passe dans la traversée 16 et connecte le dispositif. Ce câble est constitué d'une gaine 18 en caoutchouc avec blindage entourant des brins 19 conducteurs simplement munis d'un isolant 20, tout comme les fils 12 et 13. Des cales 21 immobilisent les éléments 10 et 11 dans la rehausse 7.

Le fluide à véhiculer est aspiré par une ouverture dans un couvercle 14 d'aspiration suivant la flèche F et est refoulé par une tubulure, qui n'est pas représentée.

## Revendications

1. Groupe motopompe, comprenant un impulseur (1) entouré d'une volute (2) et monté sur l'arbre (3) de sortie d'un moteur (4) électrique entouré d'une carcasse (5) fermée du côté opposé à l'impulseur (1) par un couvercle (6), une rehausse (7) étant interposée entre le couvercle (6) et la carcasse (5) et au moins un élément (11) à fil de connexion électrique est logé dans la rehausse (7), le au moins un élément (11) étant relié par un fil à l'impulseur (1) et étant un capteur d'une propriété ou d'un état de l'impulseur, **caractérisé en ce que** le fil passe dans une cheminée (15) venue de fonderie avec la carcasse (5) sur la face extérieure de celle-ci.

2. Groupe motopompe suivant la revendication 1, **caractérisé par** un joint (9) d'étanchéité entre la rehausse (7) et la carcasse (5).

3. Groupe motopompe suivant la revendication 1 ou 2, **caractérisé par** un deuxième joint (8) d'étanchéité entre le couvercle (6) et la rehausse (7).

4. Groupe motopompe suivant l'une quelconque des revendications précédentes, **caractérisé par** une rallonge de rehausse interposée entre la carcasse (5) et la rehausse (7).

5. Groupe motopompe suivant l'une quelconque des revendications précédentes, **caractérisé en ce que** le au moins un élément est une sonde de la température de l'impulseur, un capteur de la vitesse de rotation de l'impulseur, une sonde de la température du liquide véhiculé par le groupe, un capteur de la différence entre la pression de refoulement et la pression d'aspiration, un capteur des vibrations de l'impulseur ou une sonde de la température du fluide véhiculé par le groupe ou de la température de garnitures ou de paliers de l'impulseur.

6. Groupe motopompe suivant l'une quelconque des revendications précédentes, **caractérisé en ce que** le au moins un élément est relié par fil à un autre élément ou à une source de courant à l'extérieur du groupe.

7. Groupe motopompe suivant la revendication 6, **caractérisé en ce qu'**un fil de liaison restant à l'intérieur de la volute (2) est de constitution plus simple qu'un fil en sortant.

8. Groupe motopompe suivant l'une des revendications précédentes, **caractérisé par** un moyen (21) d'immobilisation de l'élément (11) dans la rehausse (7).

## Patentansprüche

1. Motorpumpeneinheit, umfassend ein Laufrad (1), das von einem Spiralgehäuse (2) umgeben ist und auf der Abtriebswelle (3) eines Elektromotors (4) montiert ist, der von einem Gehäuse (5) umgeben ist, das auf der zum Laufrad (1) entgegengesetzten Seite durch einen Deckel (6) verschlossen wird, wobei ein Aufsatz (7) zwischen dem Deckel (6) und dem Gehäuse (5) angeordnet ist, und mindestens ein Element (11) mit elektrischem Anschlussdraht in dem Aufsatz (7) aufgenommen ist, wobei das mindestens eine Element (11) durch einen Draht mit dem Laufrad (1) verbunden ist und ein Sensor für eine Eigenschaft oder einen Zustand des Laufrads ist, **dadurch gekennzeichnet, dass** der Draht in einem Kanal (15) verläuft, der an das Gehäuse (5) an dessen Außenseite angegossen ist.

2. Motorpumpeneinheit nach Anspruch 1, **gekennzeichnet durch** eine Dichtung (9) zwischen dem Aufsatz (7) und dem Gehäuse (5) .

3. Motorpumpeneinheit nach Anspruch 1 oder 2, **gekennzeichnet durch** eine zweite Dichtung (8) zwischen dem Deckel (6) und dem Aufsatz (7).

4. Motorpumpeneinheit nach einem der vorhergehenden Ansprüche, **gekennzeichnet durch** eine Aufsatzverlängerung, die zwischen dem Gehäuse (5) und dem Aufsatz (7) angeordnet ist.

5. Motorpumpeneinheit nach einem der vorhergehenden Ansprüche, **dadurch gekennzeichnet, dass** das mindestens eine Element ein Fühler für die Temperatur des Laufrads, ein Sensor für die Drehzahl des Laufrads, ein Fühler für die Temperatur der von der Einheit geförderten Flüssigkeit, ein Sensor für die Differenz zwischen dem Förderdruck und dem Ansaugdruck, ein Sensor für Vibrationen des Laufrads oder ein Fühler für die Temperatur des von der Einheit geförderten Fluids oder für die Temperatur von Verkleidungen oder Lagern des Laufrads ist.

6. Motorpumpeneinheit nach einem der vorhergehenden Ansprüche, **dadurch gekennzeichnet, dass** das mindestens eine Element durch einen Draht mit einem anderen Element oder mit einer Stromquelle außerhalb der Einheit verbunden ist.

7. Motorpumpeneinheit nach Anspruch 6, **dadurch gekennzeichnet, dass** ein Verbindungsdraht, der innerhalb des Spiralgehäuses (2) bleibt, von einfacherem Aufbau als ein daraus austretender Draht ist.

8. Motorpumpeneinheit nach einem der vorhergehenden Ansprüche, **gekennzeichnet durch** ein Mittel (21) zum Feststellen des Elements (11) in dem Aufsatz (7).

## Claims

1. Motor pump unit comprising an impeller (1) surrounded by a volute (2) and mounted on the output shaft (3) of an electric motor (4) surrounded by a housing (5) which is closed on the side opposite the impeller (1) by a cover (6), an extension (7) being interposed between the cover (6) and the housing (5) and at least one element (11) with an electrical connection wire being housed in the extension (7), in which the at least one element (11) is connected by a wire to the impeller (1) and is a sensor for sensing a property or state of the impeller, **characterised in that** the wire passes through a chimney (15) cast as part of the housing (5) on the outer face of said housing.

2. Motor pump unit according to claim 1, **characterised by** a seal (9) between the extension (7) and the housing (5).

3. Motor pump unit according to either claim 1 or claim 2, **characterised by** a second seal (8) between the cover (6) and the extension (7).

4. Motor pump unit according to any one of the preceding claims, **characterised by** an extension piece for the extension interposed between the housing (5) and the extension (7).

5. Motor pump unit according to any one of the preceding claims, **characterised in that** the at least one element is a probe to sense the temperature of the impeller, a sensor to sense the rotation speed of the impeller, a probe to sense the temperature of the liquid carried by the unit, a sensor to detect the difference between the discharge pressure and the suction pressure, a sensor for impeller vibrations or a probe to detect the temperature of the fluid carried by the unit or the temperature of the impeller packing boxes or bearings.

6. Motor pump unit according to any one of the preceding claims, **characterised in that** the at least one element is connected by a wire to another element or to a power source outside the unit.

7. Motor pump unit according to claim 6, **characterised in that** a connecting wire that remains inside the volute (2) has a more simple design than a wire leaving the unit.

8. Motor pump unit according to any one of the preceding claims, **characterised by** a means (21) of immobilising the element (11) in the extension (7).
